# EUROPÄISCHE PATENTSCHRIFT

(11) **EP 0 996 259 B1**
(45) Veröffentlichungstag und Bekanntmachung des Hinweises auf die Patenterteilung: **09.08.2006**
(21) Anmeldenummer: 99203355.5
(22) Anmeldetag: 12.10.1999
(51) Int. Cl.: H04L 12/46, H04L 12/24

(54) **Automatische Konfigurierung eines Brücken-Terminals zur Uebertragung von Daten zwischen mehreren Sub-Netzwerken in einem lokalen Netzwerk**
Automatic configuration of a terminal bridge for data transmission between a plurality of subnetworks in a local area network
Configuration automatique d'un terminal-pont pour la transmission de données entre plusieurs sous-réseaux dans un réseau local

(30) Priorität: 21.10.1998 DE 19848341
(43) Veröffentlichungstag der Anmeldung: 26.04.2000
(73) Patentinhaber: Philips Intellectual Property & Standards GmbH, 20099 Hamburg (DE); Koninklijke Philips Electronics N.V., 5621 BA Eindhoven (NL)
(72) Erfinder: Du, Yonggang, Habsburgerallee 11, 52064 Aachen (DE)
(74) Vertreter: Volmer, Georg

(56) Entgegenhaltungen:
- US-A- 4 706 081
- BAKER D.J. ET AL: "The Architectural Organization of a Mobile Radio Network via a Distributed Algorithm" IEEE TRANSACTIONS ON COMMUNICATIONS, [Online] Bd. 29, Nr. 11, November 1981 (1981-11), Seiten 1694-1701, XP002276097 Gefunden im Internet: <URL:http://ieeexplore.ieee.org/search/src habstract.jsp?arnumber=1094909&isnumber=23 933&punumber=8159&k2dockey=1094909 ieeejrn s&query=architectural+organization+of+a+mo bile+radio%3Cand%3Enetwork+via+a+distribut ed&pos=0> [gefunden am 2004-04-02]
- GERLA M ET AL: "MULTICLUSTER, MOBILE, MULTIMEDIA RADIO NETWORK" WIRELESS NETWORKS, ACM, US, Bd. 1, Nr. 3, 1. Oktober 1995 (1995-10-01), Seiten 255-265, XP000538239 ISSN: 1022-0038

## Beschreibung

Automatische Konfigurierung eines Brücken-Terminals zur Übertragung von Daten zwischen mehreren Sub-Netzwerken in einem lokalen Netzwerk

Die Erfindung bezieht sich auf ein lokales Netzwerk mit mehreren Sub-Netzwerken und mehreren Brücken-Terminals, welche jeweils zur Übertragung von Daten zwischen den Terminals von wenigstens zwei Sub-Netzwerken über ein drahtloses Medium vorgesehen sind.

Ein solches lokales Netzwerk mit mehreren Sub-Netzwerken ist aus der DE 196 37 026 A1 bekannt. Ein Sub-Netzwerk enthält mehrere Terminals, die über ein Funkübertragungsmedium (drahtloses Medium) nach dem asynchronen Transfermodus erzeugte Zellen austauschen. Daten zwischen zwei Sub-Netzwerken werden über ein Brücken-Terminal übertragen. Wie ein Brücken-Terminal nach der Inbetriebnahme zwei Sub-Netzwerke findet, zwischen denen Daten über das Brücken-Terminal ausgetauscht werden, wird nicht näher erläutert

Der Artikel von Baker D. J. et al: "The Architectural Organization of a Mobile Radio Network via a Distributed Algorithm", IEEE Transactions on Communications, Bd. 29, Nr. 11, November 1981, beschreibt ein Verfahren zur verteilten Zuweisung von Funktionen in einem Netzwerk, welches Knoten, Brücken-Terminals und Controller enthält. Das Netzwerk besteht aus mehreren Sub-Netzwerken, die jeweils von einem Controller gesteuert werden. Der Controller ist mit einem Brücken-Terminal gekoppelt, das wiederum mit einem Controller eines anderen Sub-Netzwerks gekoppelt ist. Für jedes Sub-Band des HF-Bandes wird ein Set von Clustern gebildet. Für jedes Set muss dann ein separat Algorithmus zur Selektion der Controller und Brücken-Terminals ausgeführt werden. Basierend auf dem Ergebnis des Algorithmus wird eine Verbindungskarte gebildet, die die Verbindung innerhalb dieses Sub-Bandes anzeigt. Jeder Knoten, jeder Controller und jedes Brücken-Terminal in dem Netwerk kann jede Funktion ausüben.

Die US 4,706,081 zeigt ein Verfahren zum Verknüpfen von kabelbasierten LANs. Jedes LAN verfügt über ein Brücken-Terminal. Die einzelnen Brücken-Terminals der jeweiligen LANs sind miteinander gekoppelt, um die einzelnen LANs miteinander zu verknüpfen. Somit sind jeweils mehrere Brücken-Terminals erforderlich, um zwei LANs miteinander zu koppeln.

Der Erfindung liegt die Aufgabe zugrunde, ein Brücken-Terminal zur Verbindung von wenigstens zwei Sub-Netzwerken in einem lokalen Netzwerk zu schaffen, welches nach der Inbetriebnahme automatisch Sub-Netzwerke zum Datenaustausch verbindet.

Die Aufgabe wird durch die Merkmale unabhängiger Ansprüche gelöst.

Bei einer Ausgestaltung der Erfindung wird die Aufgabe durch ein Verfahren zur Konfiguration eines Brücken-Terminals zur Verbindung von Sub-Netzwerken in einem lokalen Netzwerk gelöst wobei das lokale Netzwerk mehrere Sub-Netzwerke mit drahtlos kommunizierenden Terminals und mehrere Brücken-Terminals enthält, die jeweils Daten zwischen wenigstens zwei Sub-Netzwerken übertragen, umfassend die Schritte: Überprüfen nach Inbetriebnahme eines Brücken-Terminal welche Sub-Netzwerke von diesem Brücken-Terminal erreichbar sind und welche Kanalbündel kₚ von den erreichbaren Sub-Netzwerken benutzt werden, wobei zur Feststellung der Erreichbarkeit eine Empfangsqualität jedes benutzten Kanalbündels kₚ überprüft wird und eine Benutzung eines nalbündels kₚ in einem Sub-Netzwerk die Verwendung eines bestimmten Kanalbündels kₚ von den Terminals dieses Sub-Netzwerkes zur Übertragung von Daten darstellt, Erstellen einer Liste mit allen möglichen Kombinationen ki, kj von benutzten Kanalbündeln kₚ mit ki#kj, die jeweils n Elemente als Kennung für die erreichbaren m Subnetzwerke mit m > n und n > 1 enthalten, Sortieren der Liste der Kanalbündeikombinationen ki, kj nach einem vorgebbaren Kriterium, Verbinden der Sub-Netzwerke deren Kennungen in der ersten Kanalbilndelkombination ki, kj der sortieren Liste aufgeführt ist.

Erfindungsgemäß bestimmt ein Brücken-Terminal nach der Inbetriebnahme alle erreichbaren Sub-Netzwerke. Hierbei wird eine bestimmte Kennung ermittelt, welche das betreffende Sub-Netzwerk charakterisiert. Eine solche Kennung kann beispielsweise eine Eigenschaft eines Sub-Netzwerks sein. Eine Eigenschaft eines Sub-Netzwerks kann das dem Sub-Netzwerk zugeordnete Kanalbündel sein, welche von den Terminals zur Datenübertragung verwendet wird. Unter einem Kanalbündel sind eine Anzahl von bestimmten Kanälen zu verstehen, die jedem Sub-Netzwerk des lokalen Netzwerks zur Datenübertragung zugeordnet sind. Ein Kanal ist durch einen Frequenzbereich, einen Zeitbereich und gegebenenfalls zusätzlich noch durch einen Spreizungscode bestimmt.

Nach Detektierung von m Sub-Netzwerken wird eine Liste mit bestimmten Gruppen erstellt. Eine Gruppe enthält n Elemente. Ein Element dient als Kennung für ein Sub-Netzwerk. Die Anzahl der n Elemente muß geringer sein als die Anzahl der m Sub-Netzwerke (m > n) und n größer als 1 sein (n > 1), da mindestens zwei Sub-Netzwerke miteinander verbunden werden sollen. Beispielsweise kann eine Gruppe zwei Elemente oder Kennungen enthalten und somit ein Paar bilden. Das bedeutet, daß ein Brücken-Terminal dazu vorgesehen ist, zwei Sub-Netzwerke zu verbinden.

Die Liste wird nach einem vorgegebenen Kriterium sortiert. Wenn das Brücken-Terminal als Kennung das in einem Sub-Netzwerk zugeordnete Kanalbündel verwendet, kann das Brücken-Terminal die Summe der empfangenen Durchschnittsenergien für jede Gruppe von Kanalbündeln bilden und die Gruppen entsprechend der Abnahme der berechneten Summen sortieren. Es ist auch möglich, daß das Brücken-Terminal die Empfangsqualität einer von dem Controller gesendeten Kontrollnachricht für jede Gruppe von Kanalbündeln bestimmt und die Gruppen entsprechend der Abnahme der Empfangsqualität sortiert. Nach der Sortierung werden von dem Brücken-Terminal die Sub-Netzwerke verbunden, deren Kennung in der ersten Gruppe der sortieren Liste aufgeführt ist.

Ein Brücken-Terminal empfängt eine Kennung eines Sub-Netzwerks von einem als Controller bezeichneten Terminal des Sub-Netzwerks. Ein solcher Controller ist wenigstens für Kontroll- und Managementfunktionen in dem Sub-Netzwerk zuständig.

Wenn ein Brücken-Terminal nur zwei Sub-Netzwerke miteinander verbindet und außerdem in dem gesamten lokalen Netzwerk keine Schleife gebildet wird, ist die Weiterleitung von Daten in einem Brücken-Terminal sehr einfach zu gestalten. Eine Schleife in dem lokalen Netzwerk bedeutet, daß ein Sub-Netzwerk Daten eines anderen Sub-Netzwerks nicht nur von einem sondern von mindestens zwei Brücken-Terminals erhalten kann. Ein Brücken-Terminal führt unter den genannten Voraussetzungen, dann nur noch einfache Operationen durch. Ein Brücken-Terminal benötigt nur die Information, zu welchen der beiden Sub-Netzwerke empfangene Daten zu senden sind.

Werden Daten von dem ersten Sub-Netzwerk empfangen, deren Empfänger ebenfalls über das erste Sub-Netzwerk zu erreichen ist, werden von dem Brücken-Terminal die Daten gelöscht. Wenn die Daten aus dem ersten Sub-Netzwerk zu einem Empfänger gelangen sollen, der über das zweite Sub-Netzwerk zu erreichen ist, werden die Daten von dem Brücken-Terminal in das zweite Sub-Netzwerk gesendet. Die Daten aus dem ersten Sub-Netzwerk können entweder von einem Terminal oder Controller des ersten Sub-Netzwerks stammen oder von einem Terminal oder Controller eines anderen Sub-Netzwerks. Das Brücken-Terminal, welches das zweite Sub-Netzwerk beispielsweise mit einem dritten Sub-Netzwerk verbindet, kann gegebenenfalls die Daten auf die gleiche Weise in das dritte Sub-Netzwerk leiten.

Für ein Brücken-Terminal, welches nur zwei Sub-Netzwerke miteinander verbindet, ist es also nur erforderlich zu wissen, über welches der beiden Sub-Netzwerke der Empfänger der Daten zu erreichen ist. Es ist nicht nötig, daß das Brücken-Terminal Informationen über den tatsächlichen Ort des Empfängers und die Übertragungswege zu diesem Ort speichert.

Die Kenntnis, zu welchem Sub-Netzwerk ein Brücken-Terminal empfangene Daten senden soll, ergibt sich aus Verteil-Nachrichten, die ein neu registriertes Terminal aussendet. Diese Verteil-Nachricht enthält zumindest die Identifikationsnummer des Terminals. Mit der Identifikationsnummer wird in dem Brücken-Terminal gespeichert, zu welchem Sub-Netzwerk Daten für das Terminal zu senden sind. Das ist das Sub-Netzwerk, welches die entsprechende Verteil-Nachricht dem Brücken-Terminal geliefert hat. Falls ein Brücken-Terminal nur zwei Sub-Netzwerke verbindet, muß außer der Identifikationsnummer nur zusätzlich ein Bit für beide verbundenen Sub-Netzwerke gespeichert werden. Falls ein Brücken-Terminal eine Schleife detektiert hat, wird eine Verbindung mit zwei Sub-Netzwerken versucht, deren Kennungen der nächsten Gruppe der sortierten Liste angehören. Ein Brücken-Terminal stellt durch Aussenden einer Schleifentest-Nachricht fest, ob eine Schleife vorliegt. Kommt nach einer bestimmten Zeit die Schleifentest-Nachricht nicht zu dem Brücken-Terminal zurück, welches die Schleifentest-Nachricht ausgesendet hat, liegt keine Schleife vor. Diese Schleifentest-Nachricht kann aus Sicherheitsgründen mehrfach wiederholt werden.

Das Brücken-Terminal enthält eine Funkvorrichtung mit wenigstens einer Hochfrequenzschaltung, einem Modem und einer Protokollvorrichtung und eine Funkschaltvorrichtung. Die Funkschaltvorrichtung steuert den Austausch von Daten zwischen den Sub-Netzwerken und die Protokollvorrichtung die Verbindung zwischen wenigstens zwei Sub-Netzwerken.

Die Daten, welche im lokalen Netzwerk übertragen werden, können z.B. nach einem Paketübertragungsverfahren erzeugt sein. Die Pakete können insgesamt oder als Teilpakete nach Hinzufügung weiterer Informationen über das drahtlose Medium übertragen werden. Unter einer drahtlosen Übertragung ist eine Funk-, Infrarot-, Ultraschallübertragung etc. zu verstehen. Als Paketübertragungsverfahren kann beispielsweise der asynchrone Transfermodus (ATM) angewendet werden, der Pakete fester Länge erzeugt, die Zellen genannt werden.

Die Erfindung bezieht sich des weiteren auch auf ein Brücken-Terminal eines lokalen Netzwerks mit mehreren Sub-Netzwerken und weiteren Brücken-Terminals zur Übertragung von Daten zwischen den Terminals von wenigstens zwei Sub-Netzwerken über ein drahtloses Medium.

Ausführungsbeispiele der Erfindung werden nachstehend anhand der Figuren näher erläutert. Es zeigen:
- Fig. 1: ein lokales Netzwerk mit drei Sub-Netzwerken, die jeweils zur Funkübertragung vorgesehene Terminals enthalten,
- Fig. 2: ein Terminal des lokalen Netzwerks nach Fig. 1,
- Fig. 3: eine Funkvorrichtung des Terminals nach Fig. 2,
- Fig. 4 und 5: zwei Ausführungen eines zur Verbindung von zwei Sub-Netzwerken vorgesehenen Brücken-Terminals,
- Fig. 6: ein Diagramm zur Erläuterung des zeitlichen Ablaufs der Synchronisation eines Brücken-Terminals nach Fig. 5 mit zwei Sub-Netzwerken und
- Fig. 7 bis 9: mehrere Sub-Netzwerke, die über Brücken-Terminals verbunden sind und nicht erwünschte Schleifen bilden.

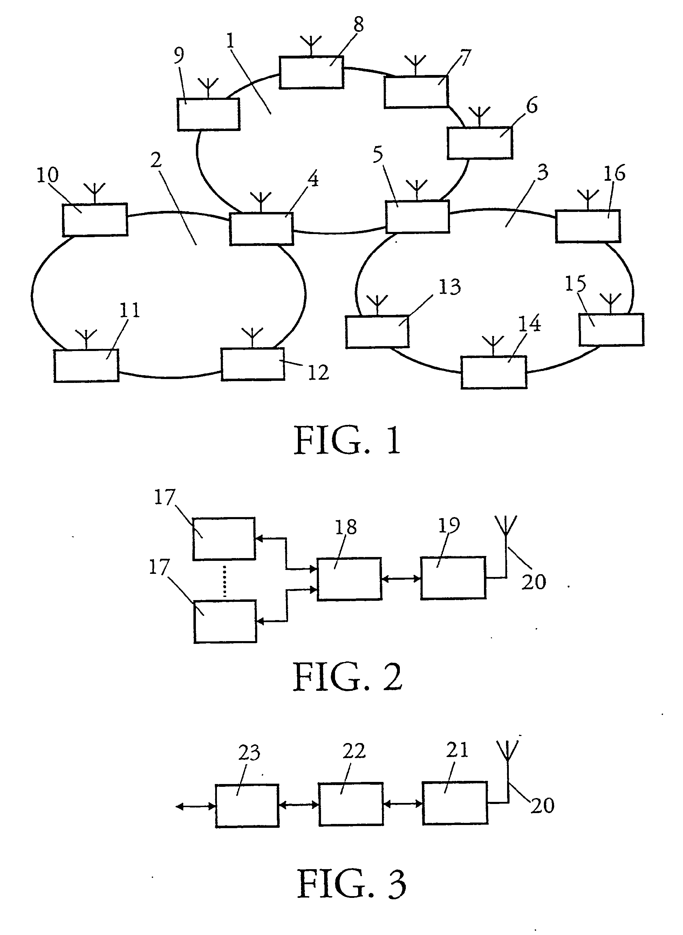

In Fig. 1 ist ein Ausführungsbeispiel eines nach dem asynchronen Transfermodus (ATM) arbeitenden, lokalen Netzwerks mit drei Sub-Netzwerken 1 bis 3 dargestellt, die jeweils mehrere Terminals 4 bis 16 enthalten. Bestandteil des Sub-Netzwerks 1 sind die Terminals 4 bis 9, des Sub-Netzwerks 2 die Terminals 4 und 10 bis 12 und des Sub-Netzwerks 3 die Terminals 5 und 13 bis 16. In einem Sub-Netzwerk tauschen die jeweils zu einem Sub-Netzwerk gehörenden Terminals Daten über Funkstrecken aus. Die in Fig. 1 eingezeichneten Ellipsen geben den Funkbereich eines Sub-Netzwerks (1 bis 3) an, in dem zwischen den zu dem Sub-Netzwerk gehörenden Terminals eine weitgehend problemlose Funkübertragung möglich ist.

Die Terminals 4 und 5 werden Brücken-Terminals genannt, weil diese einen Datenaustausch zwischen zwei Sub-Netzwerken 1 und 2 bzw. 1 und 3 ermöglichen. Das Brücken-Terminal 4 ist für den Datenverkehr zwischen den Sub-Netzwerken 1 und 2 und das Brücken-Terminal 5 für den Datenverkehr zwischen den Sub-Netzwerken 1 und 3 zuständig.

Ein Sub-Netzwerk 1 bis 3 des lokalen Netzwerks kann beispielsweise ein Adhoc-Netzwerk sein, welches durch über Funkstrecken verbundene Terminals von um einen Tisch sitzenden Teilnehmern gebildet wird. Solche Terminals können z.B. Kommunikationsvorrichtungen zum drahtlosen Austausch von Dokumenten, Bildern usw. sein. Ein Adhoc-Netzwerk ist dadurch gekennzeichnet, daß die Struktur und die Anzahl von Teilnehmern innerhalb vorgegebener Grenzwerte nicht festgelegt ist. Beispielsweise kann eine Kommunikationsvorrichtung eines Teilnehmers aus dem Netzwerk genommen oder eingebunden werden.

Ein Terminal 4 bis 16 des lokalen Netzwerks nach Fig. 1 kann eine mobile oder feste Kommunikationsvorrichtung sein und enthält beispielsweise mindestens eine Station 17, eine Verbindungskontrollvorrichtung 18 und eine Funkvorrichtung 19 mit Antenne 20, wie dies Fig. 2 zeigt. Eine Station 17 kann beispielsweise ein tragbarer Computer, Fernsprecher usw. sein. Die Verbindungskontrollvorrichtung 18 ist z.B. aus dem Dokument DE 196 39 845 C1 bekannt und dient zur Vermittlung von ATM-Verbindungen (virtuelle Verbindungen) und zur Verteilung von ATM-Zellen. Eine Zelle enthält typischerweise ein Kopffeld mit 5 Byte und ein Informationsfeld mit 48 Byte. Die im Kopffeld der Zelle enthaltenen Informationen dienen insbesondere zur Adressierung und zur Durchführung von Vermittlungsfunktionen. Zellen können von einer in der Verbindungskontrollvorrichtung 18 enthaltenen Steueranordnung und von einer Station 17 erzeugt und von der Funkvorrichtung 19 empfangen werden.

Eine virtuelle Verbindung, die beispielsweise eine Station 17 eines ersten Terminals mit einer Station 17 eines zweiten Terminals wünscht, wird jeweils von den Verbindungskontrollvorrichtungen 18 des ersten und zweiten Terminals aufgebaut. Hier liegt dann eine Einzel-Verbindung vor. Bei einer Einzel-Verbindung (unicast connection) oder Ende-zu-Ende-Verbindung besteht eine virtuelle Verbindung eines Anwenders (z.B. ein auf einem tragbaren Computer laufendes Programm) eines ersten Terminals mit einem Anwender (z.B. Datenbank, auf welche das Programm zugreift) eines zweiten Terminals. Es sind noch zwei weitere Verbindungsarten zu unterscheiden. Bei einer Mehrfach-Verbindung (multicast connection) oder Punkt-zu-Multipunkt-Verbindung sind mehrere Anwender von Terminals miteinander verbunden. Falls eine Verteil-Verbindung (broadcast connection) vorliegt, liefen ein Anwender eines Terminal an alle anderen Anwender der Terminals Zellen mit gleichem Inhalt im Informationsfeld.

Eine Funkvorrichtung 19 der Terminals 6 bis 16 ist ebenfalls aus dem Dokument DE 196 39 845 C1 bekannt und enthält, wie Fig. 3 zeigt, außer der Antenne 20 eine Hochfrequenzschaltung 21, ein Modem 22 und eine Protokollvorrichtung 23. Die Protokollvorrichtung 23 bildet aus dem von der Verbindungskontrollvorrichtung 18 empfangenen ATM-Zellenstrom Paketeinheiten. Eine Paketeinheit enthält mindestens Teile einer ATM-Zelle und zusätzliche von der Protokollvorrichtung 23 gebildete Steuerinformationen. Die Protokollvorrichtung verwendet Protokolle für die LLC-Schicht (LLC = Logical Link Control) und die MAC-Schicht (MAC = Medium Access Control). Die MAC-Schicht steuert den Mehrfachzugriff eines Terminals zum Funkübertragungsmedium und die LLC-Schicht führt eine Fluß- und Fehlerkontrolle durch.

In einem Sub-Netzwerk 1 bis 3 ist ein bestimmtes Terminal zuständig für die Kontroll- und Managementfunktionen und wird als Controller bezeichnet. Der Controller arbeitet außerdem als normales Terminal im zugehörigen Sub-Netzwerk aus, wie dies beispielsweise in der DE 196 39 845 C1 beschrieben ist. Der Controller ist z.B. für die Registrierung von Terminals, die den Betrieb im Sub-Netzwerk aufnehmen, für den Verbindungsaufbau zwischen wenigstens zwei Terminals im Funkübertragungsmedium, für die Resourcenverwaltung und für die Zugriffssteuerung im Funkübertragungsmedium zuständig. So erhält beispielsweise ein Terminal eines Sub-Netzwerks nach der Registrierung und nach der Anmeldung eines Übertragungswunsches vom Controller Übertragungskapazität für Daten (Paketeinheiten) zugewiesen.

In dem lokalen Netzwerk können die Daten zwischen den Terminals nach einem TDMA-, FDMA- oder CDMA-Verfahren (TDMA = Time Division Multiplex Access, FDMA = Frequency Division Multiplex Access, CDMA = Code Division Multiplex Access) ausgetauscht werden. Die Verfahren können auch kombiniert werden. Jedem Sub-Netzwerk 1 bis 3 des lokalen Netzwerks sind eine Anzahl von bestimmten Kanälen zugeordnet, die als Kanalbündel bezeichnet werden. Ein Kanal ist durch einen Frequenzbereich, einen Zeitbereich und z.B. beim CDMA-Verfahren durch einen Spreizungscode bestimmt. Beispielsweise kann jedem Sub-Netzwerk 1 bis 3 zum Datenaustausch ein bestimmter, jeweils unterschiedlicher Frequenzbereich von fᵢ - Δfᵢ/2 bis fᵢ + Δfᵢ/2 zur Verfügung stehen, wobei fᵢ die Trägerfrequenz und Δfᵢ die Bandbreite ist. In einem solchen Frequenzbereich können beispielsweise Daten mittels des TDMA-Verfahrens übertragen werden. Dabei kann dem Sub-Netzwerk 1 die Trägerfrequenz f₁ und die Bandbreite Δf₁, dem Sub-Netzwerk 2 die Trägerfrequenz f₂ und die Bandbreite Δf₂ und dem Sub-Netzwerk 3 die Trägerfrequenz f₃ und die Bandbreite Δf₃ zugewiesen werden. Das Brücken-Terminal 4 arbeitet einerseits, um mit den anderen Terminals des Sub-Netzwerks 1 einen Datenaustausch durchführen zu können, im Frequenzbereich von f₁ - Δf₁/2 bis f₁ + Δf₁/2 und andererseits, um mit den anderen Terminals des Sub-Netzwerks 2 einen Datenaustausch durchführen zu können, im Frequenzbereich von f₂ - Δf₂/2 bis f₂ + Δf₂/2. Das zweite im lokalen Netzwerk enthaltene Brücken-Terminal 5, welches Daten zwischen den Sub-Netzwerken 1 und 3 überträgt, arbeitet einerseits im Frequenzbereich von f₁ - Δf₁/2 bis f₁ + Δf₁/2 und andererseits im Frequenzbereich von f₃ - Δf₃/2 bis f₃ + Δf₃/2.

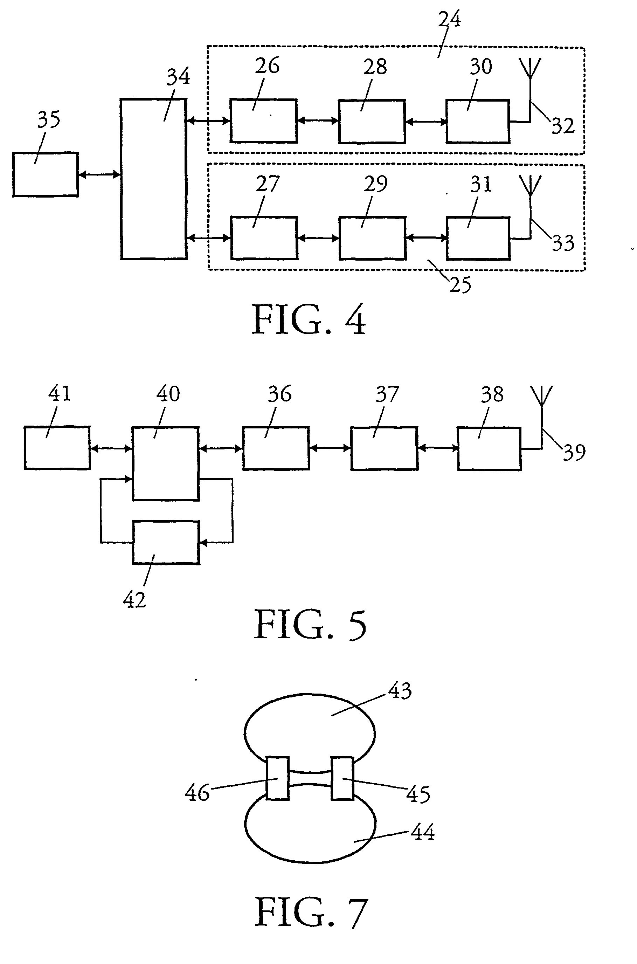

Ein Blockschaltbild eines ersten Ausführungsbeispiel eines Brücken-Terminals ist in Fig. 4 gezeigt. Das Brücken-Terminal enthält einen ersten Funkschaltungszweig 24 zur Kommunikation mit den Terminals eines ersten Sub-Netzwerks und einen zweiten Funkschaltungszweig 25 zur Kommunikation mit den Terminals eines zweiten Sub-Netzwerks. Die Funkschaltungszweige 24 und 25, die eine Funkvorrichtung bilden, enthalten jeweils eine Protokollvorrichtung 26 bzw. 27, jeweils ein Modem 28 bzw. 29 und jeweils eine Hochfrequenzschaltung 30 bzw. 31 mit jeweils einer Antenne 32 bzw. 33. Eine Funkschaltvorrichtung 34 ist einerseits mit den beiden Funkschaltungszweigen 24 und 25 und andererseits mit einer Verbindungskontrollvorrichtung 35 gekoppelt. Eine oder mehrere Stationen, welche mit der Verbindungskontrollvorrichtung 35 verbunden sind, sind in der Fig. 4 nicht dargestellt. Über die Antenne 32 des Funkschaltungszweiges 24 werden Daten in einem ersten Kanalbündel und über die Antenne 33 des Funkschaltungszweiges 25 Daten in einem zweiten Kanalbündel abgestrahlt.

Daten, die von der Verbindungskontrollvorrichtung 35 kommen, werden von der Funkschaltvorrichtung 34 in Abhängigkeit von Adreßinformationen zur Protokollvorrichtung 26 und/oder 27 geleitet. Des weiteren führt die Funkschaltvorrichtung 34 Daten von einer Protokollvorrichtung 26 oder 27 zur Verbindungskontrollvorrichtung 35 und/oder zur jeweils anderen Protokollvorrichtung 26 oder 27. Wenn an die Verbindungskontrollvorrichtung 35 wenigstens eine Station angeschlossen ist, dient das Brücken-Terminal nicht nur zum Austausch von Daten zwischen zwei Sub-Netzwerken, sondern arbeitet auch als normales Terminal. Der Vorteil dieses ersten Ausführungsbeispiels ist, daß mit den Sub-Netzwerken jederzeit Daten ausgetauscht werden können.

Es ist auch möglich, daß ein Brücken-Terminal mehr als zwei Funkschaltungszweige 24 und 25 enthält und zwar dann, wenn das Brücken-Terminal mehr als zwei Sub-Netzwerke verbindet. Die Anzahl der Funkschaltungszweige entspricht dann der Anzahl der zu verknüpfenden Sub-Netzwerke.

Ein Blockschaltbild eines zweiten Ausführungsbeispiels eines Brücken-Terminals ist in Fig. 5 dargestellt. Die Funkschaltvorrichtung dieses Brücken-Terminals enthält jeweils nur eine einzige Protokollvorrichtung 36, ein einziges Modem 37 und eine einzige Hochfrequenzschaltung 38 mit Antenne 39. Mit der Protokollvorrichtung 36 ist eine Funkschaltvorrichtung 40 verbunden, die des weiteren an eine Verbindungskontrollvorrichtung 41 und einer Zwischenspeichervorrichtung 42 angeschlossen ist. Die Zwischenspeichervorrichtung 42 enthält in dieser Ausführungsform ein Speicherelement und dient zur Zwischenspeicherung von Daten und ist als FIFO-Baustein realisiert (First In First Out), d.h. die Daten werden in der Reihenfolge aus der Zwischenspeichervorrichtung 42 gelesen, in der sie eingeschrieben worden sind. Das in Fig. 5 dargestellte Terminal kann ebenfalls als normales Terminal arbeiten. An die Verbindungskontrollvorrichtung 41 angeschlossene Stationen, die nicht in Fig. 5 eingezeichnet sind, liefern dann über die Verbindungskontrollvorrichtung 41 Daten zur Funkschaltvorrichtung 40.

Das Brücken-Terminal nach der Fig. 5 ist abwechselnd mit einem ersten und zweiten Sub-Netzwerk synchronisiert. Unter Synchronisation wird der gesamte Prozeß der Einbindung eines Terminals im Sub-Netzwerks bis zum Austausch von Daten verstanden. Wenn das Brücken-Terminal mit dem ersten Sub-Netzwerk synchronisiert ist, kann es Daten mit allen Terminals und mit dem Controller dieses ersten Sub-Netzwerks austauschen. Werden von der Verbindungskontrollvorrichtung 41 Daten an die Funkschaltvorrichtung 40 geliefert, deren Bestimmungsort ein Terminal oder der Controller des ersten Sub-Netzwerks oder ein Terminal oder Controller eines anderen Sub-Netzwerks ist, die über das erste Sub-Netzwerk zu erreichen sind, leitet die Funkschaltvorrichtung diese Daten direkt an die Protokollvorrichtung 36 weiter. In der Protokollvorrichtung 36 werden die Daten solange zwischengespeichert, bis der vom Controller bestimmte Zeitabschnitt für die Übertragung erreicht ist. Wenn die von der Verbindungskontrollvorrichtung 41 ausgegebenen Daten zu einem Terminal oder dem Controller des zweiten Sub-Netzwerks oder zu einem anderen über das zweite Sub-Netzwerk zu erreichenden Sub-Netzwerk gesendet werden sollen, muß die Funkübertragung bis zu dem Zeitabschnitt verzögert werden, in dem das Brücken-Terminal mit dem zweiten Sub-Netzwerk synchronisiert ist. Daher leitet die Funkschaltvorrichtung die Daten, deren Bestimmungsort im zweiten Sub-Netzwerk liegt oder deren Bestimmungsort über das zweite Sub-Netzwerk zu erreichen ist, zu der Zwischenspeichervorrichtung 42, welche die Daten solange zwischenspeichert, bis das Brücken-Terminal mit dem zweiten Sub-Netzwerk synchronisiert ist.

Wenn Daten von einem Terminal oder dem Controller des ersten Sub-Netzwerks vom Brücken-Terminal empfangen werden und deren Bestimmungsort ein Terminal oder der Controller des zweiten Sub-Netzwerks oder ein Terminal oder Controller eines anderen über das zweite Sub-Netzwerk zu erreichenden Sub-Netzwerks ist, werden diese Daten ebenfalls bis zur Synchronisation mit dem zweiten Sub-Netzwerk in der Zwischenspeichervorrichtung 42 abgelegt. Daten, deren Bestimmungsort eine Station des Brücken-Terminals ist, werden direkt über die Funkschaltvorrichtung 40 zur Verbindungskontrollvorrichtung 41 gegeben, die dann die empfangenen Daten zu der gewünschten Station leitet. Daten, deren Bestimmungsort weder eine Station des Brücken-Terminals noch ein Terminal oder Controller des zweiten Sub-Netzwerks ist, werden von der Funkschaltvorrichtung 40 gelöscht. Auch Daten, die nicht über das zweite Sub-Netzwerk weitergeleitet werden sollen, werden gelöscht.

Nach dem Synchronisationswechsel des Brücken-Terminals vom ersten zum zweiten Sub-Netzwerk werden die in der Zwischenspeichervorrichtung 42 befindlichen Daten in der Einschreibreihenfolge wieder aus der Zwischenspeichervorrichtung 42 gelesen. Anschließend können während der Dauer der Synchronisation des Brücken-Terminals mit dem zweiten Sub-Netzwerk alle Daten, deren Bestimmungsort ein Terminal oder der Controller des zweiten Sub-Netzwerks oder ein anderes über das zweite Sub-Netzwerk zu erreichende Sub-Netzwerk ist, sofort von der Funkschaltvorrichtung 40 zur Protokollvorrichtung 36 weitergegeben und nur die Daten, deren Bestimmungsort ein Terminal oder der Controller des ersten Sub-Netzwerks oder ein anderes über das erste Sub-Netzwerk zu erreichende Sub-Netzwerk ist, in der Zwischenspeichervorrichtung 42 gespeichert werden.

Es ist nicht unbedingt erforderlich, daß erst Daten, die für Terminals oder den Controller des ersten Sub-Netzwerks bestimmt sind, dann in der Zwischenspeichervorrichtung 42 zu speichern, wenn alle anderen Daten ausgelesen sind. In der Protokollvorrichtung 36 werden die Daten bis zu dem zur Übertragung vorgesehenen Zeitabschnitt zwischengespeichert.

Die Zwischenspeicherung der Daten für das erste Sub-Netzwerk kann schon während des Ausleseprozesses der Daten für das zweite Sub-Netzwerk erfolgen. Es muß nur sichergestellt werden, daß die neu gespeicherten Daten für das erste Sub-Netzwerk solange zwischengespeichert werden, bis das Brücken-Terminal mit dem ersten Sub-Netzwerk synchronisiert ist. Wenn das Brücken-Terminal mit dem ersten Sub-Netzwerk verbunden ist, ist ebenfalls eine Zwischenspeicherung der für das zweite Sub-Netzwerk bestimmten Daten möglich, während der Ausleseprozeß aus der Zwischenspeichervorrichtung 42 für die Daten des ersten Sub-Netzwerks andauert.

Die Kenntnis der Funkschaltvorrichtung 40 (oder auch der Funkschaltvorrichtung 34 in der Fig. 4) über den Bestimmungsort von empfangenen Daten wird z.B. aus Adreßinformationen aus den Daten entnommen. Diese Adreßinformation ist beispielsweise die Identifikationsnummer eines Terminals. Wenn der Bestimmungsort von in der Funkschaltvorrichtung 40 eintreffenden Daten eine Station des Brücken-Terminals oder ein Terminal oder Controller eines Sub-Netzwerks ist, greift die Funkschaltvorrichtung beispielsweise auf Vergleichsdaten zurück, die in einem mit der Funkschaltvorrichtung verbundenem Tabellenspeicher abgelegt sind. Hier sind Vergleichsdaten enthalten, aus welchen die Funkschaltvorrichtung entnimmt, wohin empfangene Daten weitergeleitet werden sollen. Nach einer Registrierung eines Terminals in einem Sub-Netzwerk wird von dem Terminal eine Verteil-Nachricht (Broadcast message) ausgesendet, in der die Identifikationsnummer des Terminals enthalten ist. Ein diese Verteil-Nachricht empfangendes Brücken-Terminal speichert in dem Tabellenspeicher die Identifikationsnummer und z.B. eine Nummer zur Kennzeichnung des mit dem Brücken-Terminal verbundenen Sub-Netzwerks, von dem die Verteil-Nachricht kommt. Daten, die beispielsweise von einem anderen Sub-Netzwerk dem Brücken-Terminal geliefert werden und die als Adreßinformation die Identifikationsnummer des Terminals aufweisen, werden dann an das Sub-Netzwerk geleitet, von welchem die Verteil-Nachricht stammt.

Der Tabellenspeicher enthält außerdem Vergleichsdaten von der Verbindungskontrollvorrichtung 41 für die am Brücken-Terminal angeschlossenen Stationen, damit bestimmte eintreffende Daten zur Verbindungskontrollvorrichtung des Brücken-Terminals geliefert werden können. Ein Brücken-Terminal, welches die Verteil-Nachricht erhält, muß diese Verteil-Nachricht noch an das jeweilige andere Sub-Netzwerke weiterleiten.

Nach Eintreffen von Daten in der Funkschaltvorrichtung 40 werden die Adreßinformationen der Daten mit den Vergleichsdaten vergleichen. In Abhängigkeit von dem Vergleich führt die Funkschaltvorrichtung entsprechende Schaltvorgänge durch. Beispielsweise sollen Daten von dem Terminal 14 des Sub-Netzwerks 3 der Fig. 1 über das Brücken-Terminal 5, das Sub-Netzwerk 1 und das Brücken-Terminal 4 zum Terminal 11 gelangen. Das Brücken-Terminal 5 muß Vergleichsdaten in seinem Tabellenspeicher enthalten, die angeben, daß die Daten über das Sub-Netzwerk 1 zum Sub-Netzwerk 2 gelangen sollen. Solche Vergleichsdaten sind z.B. in den Brücken-Terminals 4 und 5 gespeichert worden, nachdem das Terminal 14 in dem Sub-Netzwerk 3 registriert worden ist. Das Terminal 14 sendet eine Verteil-Nachricht nach der Registrierung, in der die Identifikationsnummer des Terminals angegeben ist. Wenn die Brücken-Terminals 4 und 5 diese Verteil-Nachricht erhalten, muß es Vergleichsdaten für dieses Terminal in dem Tabellenspeicher ablegen. Anschließend wird diese Verteil-Nachricht von den Brücken-Terminals 4 bzw. 5 weitergeleitet und somit über das gesamte lokale Netzwerk verteilt. Empfängt ein Terminal oder Controller eine solche Verteil-Nachricht wird diese gelöscht. Die Verteil-Nachricht wird noch durch Hinzufügung der Identifikationsnummer des die Verteil-Nachricht passierenden Brücken-Terminals ergänzt. Hierdurch wird erreicht, das ein Brücken-Terminal, das die Verteil-Nachricht eines Terminals zum zweiten Mal erreicht, diese Verteil-Nachricht nicht weiter verarbeiten muß, sondern diese löscht.

Der Vorteil, nur einen Funkschaltungszweig mit Protokollvorrichtung 36, Modem 37 und Hochfrequenzschaltung 38 für ein Brücken-Terminal zu verwenden, besteht einerseits darin, einen weiteren Funkschaltungszweig mit kostenintensiven Bauteilen und andererseits der Einsatz von Filtern zur Unterdrückung des Nebensprechens von zwei Funkschaltungszweigen zu vermeiden. Falls das Brücken-Terminal mit einem Funkschaltungszweig mehr als zwei Sub-Netzwerke verbinden soll, sind weitere Speicherelemente in der Zwischenspeichervorrichtung erforderlich und es müssen weitere Zeitabschnitte vorgesehen sein, zur Synchronisation mit einem Sub-Netzwerk. Wenn das Brücken-Terminal M Sub-Netzwerke verbinden soll (M ∈ N, M ≥ 2), dann muß die Anzahl der Speicherelemente in der Zwischenspeichervorrichtung und die Anzahl der Zeitabschnitte mindestens M - 1 sein. Vorteilhaft wäre die Anzahl der Speicherelemente gleich M zu setzen, damit bei einem Wechsel der Verbindung von zwei Sub-Netzwerken die Daten immer in dasselbe Speicherelement geschrieben werden. Hiermit vereinfacht sich dann die Steuerung des Einschreib- und Ausleseprozesses in bzw. aus den Speicherelementen der Zwischenspeichervorrichtung.

Wenn alle zwei Sub-Netzwerke verbindenden Brücken-Terminals im lokalen Netzwerk so verteilt sind, daß keine Schleifenbildung vorliegt, kann die Weiterleitung der Daten in einem Brücken-Terminal vereinfacht werden. Eine Schleife bedeutet, daß ein Sub-Netzwerk immer von mehreren Brücken-Terminals Daten eines anderen Sub-Netzwerks erhalten kann. Wenn das Brücken-Terminal Daten von einem Terminal oder dem Controller eines ersten Sub-Netzwerks empfängt und deren Bestimmungsort über das zweite Sub-Netzwerk zu erreichen ist, werden von der Funkschaltvorrichtung 34 oder 40 direkt (Ausführungsbeispiel nach Fig. 4) oder nach Zwischenspeicherung (Ausführungsbeispiel nach Fig. 5) in das zweite Sub-Netzwerks gesendet. Von einem Terminal oder dem Controller des ersten Sub-Netzwerks gesendete Daten, deren Bestimmungsort eine Station des Brücken-Terminals ist, werden von der Funkschaltvorrichtung 34 oder 40 zur Verbindungskontrollvorrichtung 35 oder 41 gegeben und von dieser zu der gewünschten Station geleitet. Von einem Terminal oder dem Controller des ersten Sub-Netzwerks empfangene Daten, deren Bestimmungsort ein Terminal oder Controller des ersten Sub-Netzwerks ist oder die nicht vom Brücken-Terminal weiterzuleiten sind, werden von der Funkschaltvorrichtung gelöscht.

Empfängt das Brücken-Terminal Daten von einem Terminal oder dem Controller des zweiten Sub-Netzwerks, deren Bestimmungsort über das erste Sub-Netzwerk zu erreichen ist, werden diese Daten direkt (Ausführungsbeispiel nach Fig. 4) oder nach Zwischenspeicherung (Ausführungsbeispiel nach Fig. 5) in das erste Sub-Netzwerk gesendet. Von einem Terminal oder dem Controller des zweiten Sub-Netzwerks gesendete Daten, deren Bestimmungsort eine Station des Brücken-Terminals ist, werden von der Funkschaltvorrichtung 34 oder 40 zur Verbindungskontrollvorrichtung 35 oder 41 gegeben und von dieser zu der gewünschten Station geleitet. Von einem Terminal oder dem Controller des zweiten Sub-Netzwerks empfangene Daten, deren Bestimmungsort ein Terminal oder der Controller des zweiten Sub-Netzwerks ist und die nicht von dem Brücken-Terminal weiterzuleiten sind, werden von der Funkschaltvorrichtung gelöscht.

Ein Brücken-Terminal, das nur zwei Sub-Netzwerke verbindet und das in einem lokalen Netzwerk ohne Schleifenbildung eingebunden ist, benötigt für die Weiterleitung von Daten keine zusätzliche Signalisierungsinformation. Ist der Bestimmungsort von Daten über das Sub-Netzwerk zu erreichen, von dem die Daten stammen, werden diese Daten gelöscht. Daten, deren Bestimmungsort über das jeweilige andere Sub-Netzwerk zu erreichen ist, werden zu dem anderen Sub-Netzwerk weitergeleitet. Das bedeutet, das ein Brücken-Terminal nur wissen muß, über welches der beiden verbundenen Netzwerke der Empfänger der Daten zu erreichen ist. Kenntnisse über den tatsächlichen Bestimmungsort des Empfängers und die Übertragungswege zu diesem Bestimmungsort sind nicht erforderlich.

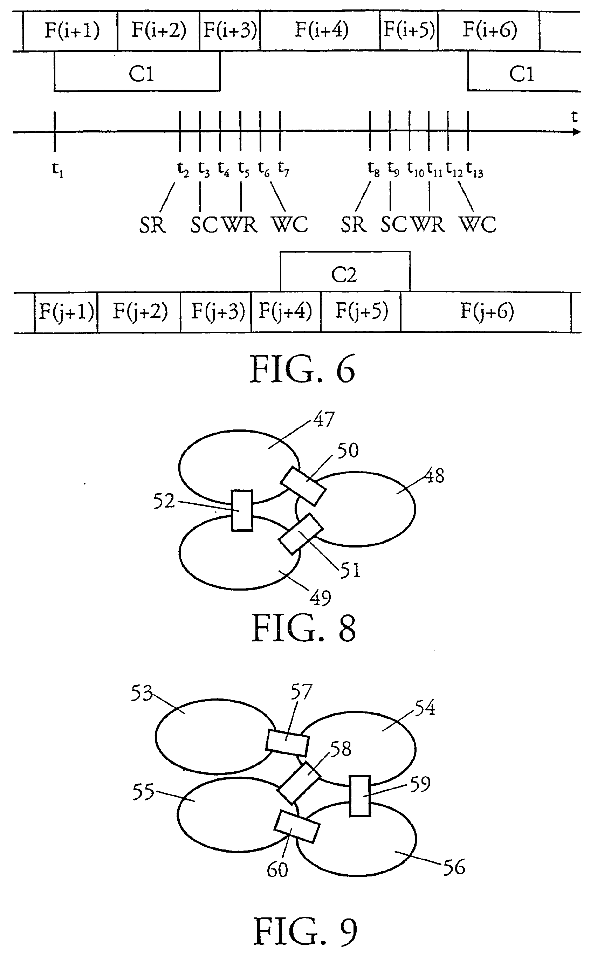

Anhand der Fig. 6 wird im folgenden der zeitliche Ablauf der Synchronisation eines Brücken-Terminals nach Fig. 5 mit einem ersten und zweiten Sub-Netzwerk erläutert. Der zeitliche Ablauf ist dabei auf Rahmen der MAC-Schicht (MAC-Rahmen) des ersten und zweiten Sub-Netzwerks bezogen. Die aufeinanderfolgenden MAC-Rahmen des ersten Sub-Netzwerks sind in Fig. 6 mit F(i + 1), F(i + 2), ..., F(i + 6) und die des zweiten Sub-Netzwerks mit F(j + 1), F(j + 2), ... , F(j + 6) bezeichnet. Die Zeitdauer der Synchronisation oder Verbindung des Brücken-Terminals mit dem ersten Sub-Netzwerk wird mit C1 und die Zeitdauer der Synchronisation oder Verbindung mit dem zweiten Sub-Netzwerk mit C2 bezeichnet. Die jeweiligen Rahmen F(i + 1), F(i + 2), ... , F(i + 6) und F(j + 1), F(j + 2), ... , F(j + 6) können von unterschiedlicher Dauer sein.

Verschiedene Zeitpunkte t₁, t₂, ... , t₁₃ sind auf einer Zeitachse t eingetragen. In dem Beispiel nach der Fig. 6 beginnt die Synchronisation oder Verbindung des Brücken-Terminals zum Zeitpunkt t₁ während des Rahmens F(i + 1) und endet zu einem Zeitpunkt t₄ während des Rahmens F(i + 3). Während dieses Zeitabschnittes, vom Zeitpunkt t₁ bis zum Zeitpunkt t₄, ist für das erste Sub-Netzwerk das Brücken-Terminal in einem Aktivmodus und für das zweite Sub-Netzwerk das Brücken-Terminal in einem Schlafmodus. Während des Schlafmodus besteht keine Verbindung des Brücken-Terminals zu einem Sub-Netzwerk. Bevor der Aktivmodus mit dem ersten Sub-Netzwerk beendet wird, sendet das Brücken-Terminal zum Zeitpunkt t₂ (t₂ < t₄) eine Schlafwunsch-Nachricht SR (sleep request message) zum Controller des ersten Sub-Netzwerks. In dieser Schlafwunsch-Nachricht SR ist ein Vorschlag für den Zeitpunkt des Beginns des Schlafmodus bzw. des Endes des Aktivmodus (Zeitpunkt t₄) und eine Angabe für die Dauer des Schlafmodus enthalten. Der Controller des ersten Sub-Netzwerks bestätigt zu einem Zeitpunkt t₃ (t₂ < t₃ < t₄) den Schlafwunsch durch Aussendung einer Schlafbestätigungs-Nachricht SC (sleep confirmation message). In der Schlafbestätigungs-Nachricht SC ist der genaue Zeitpunkt des Beginns des Schlafmodus angegeben. Hierbei wird die Startzeit t₄ des Schlafmodus des Brücken-Terminals für das erste Sub-Netzwerk von dem Controller bestätigt.

Nach dem Zeitpunkt t₄ versucht das Brücken-Terminal sich mit dem zweiten Sub-Netzwerk zu synchronisieren. Die Synchronisation wird dabei über den Controller des zweiten Sub-Netzwerks durchgeführt. Hierbei erhält das Brücken-Terminal von dem Controller des zweiten Sub-Netzwerks alle erforderlichen System- und Synchronisationsinformationen, um einen Datenaustausch mit den Terminals des zweiten Sub-Netzwerks durchführen zu können. Nach der Synchronisation sendet das Brücken-Terminal zu einem Zeitpunkt t₅ während des Rahmens F(j + 3) des zweiten Sub-Netzwerks eine Weckwunsch-Nachricht WR (wake-up request message) an den Controller des zweiten Sub-Netzwerks. Diese Weckwunsch-Nachricht WR enthält einen Vorschlag für den Beginn des Aktivmodus des Brücken-Terminals mit dem zweiten Sub-Netzwerk und eine Angabe für die Dauer des Aktivmodus. Der Controller antwortet auf diese Weckwunsch-Nachricht WR zu einem Zeitpunkt t₆ mit einer Weckbestätigungs-Nachricht WC (wake-up confirmation message), in welcher der genaue Zeitpunkt des Beginns des Aktivmodus angegeben ist. Zu einem Zeitpunkt t₇ (t₆ < t₇) beginnt der Aktivmodus des Brücken-Terminals mit dem zweiten Sub-Netzwerk und somit ggf. der Datenaustausch mit den Terminals des zweiten Sub-Netzwerks.

Der oben beschriebene Prozeß für die Beendigung des Aktivmodus des ersten Sub-Netzwerks bzw. den Beginn des Schlafmodus des Brücken-Terminals mit dem zweiten Sub-Netzwerk wird zum Zeitpunkt t₈ dann auch mit einer Schlafwunsch-Nachricht SR für das zweite Sub-Netzwerk durchgeführt. Zum Zeitpunkt t₉ erhält das Brücken-Terminal eine Schlafbestätigungs-Nachricht vom Controller des zweiten Sub-Netzwerks und der Aktivmodus des Brücken-Terminals mit dem zweiten Sub-Netzwerk endet zum Zeitpunkt t₁₀. Anschließend synchronisiert sich das Brücken-Terminal wieder mit dem Controller des ersten Sub-Netzwerks und sendet nach der Synchronisation zum Zeitpunkt t₁₁ eine Weckwunsch-Nachricht WR zum Controller des ersten Sub-Netzwerks. Zum Zeitpunkt t₁₂ empfängt das Brücken-Terminal die Weckbestätigungs-Nachricht WC und startet die Kommunikation mit den Terminals des ersten Sub-Netzwerks zum Zeitpunkt t₁₃.

Für die Bildung der verschiedenen Nachrichten ist z.B. eine als Mikroprozessor ausgebildete Steuervorrichtung in der Protokollvorrichtung 36 vorgesehen. Die Protokollvorrichtung 36 ist, wie oben schon erwähnt, für die MAC- und LLC-Schicht und ggf. für weitere Steuerungsvorgänge des Funkübertragungsmediums verantwortlich (vgl. DE 196 39 845 C1).

In den vorhergehenden Absätzen ist der Aufbau eines lokalen Netzwerks mit mehreren Sub-Netzwerken und eines die verschiedenen Sub-Netzwerke verbindenden Brücken-Terminals erläutert worden. Im folgenden wird die automatische Konfigurierung eines oder mehrerer Brücken-Terminals beschrieben, die ihren Betrieb in einem lokalen Netzwerk aufnehmen.

Nimmt ein Brücken-Terminal den Betrieb in einem lokalen Netzwerk mit mehr als zwei Sub-Netzwerken auf, so ist entweder erforderlich zu bestimmen, welche Sub-Netzwerke das Brücken-Terminal verbinden soll, oder es ist eine automatische Konfigurierung zu starten. Bei der automatischen Konfigurierung prüft das Brücken-Terminal zuerst, welche Sub-Netzwerke erreichbar sind und welche Kanalbündel die erreichbaren Sub-Netzwerke benutzen. Unter der Benutzung eines Kanalbündels in einem Sub-Netzwerk wird die Verwendung eines bestimmten Kanalbündels von den Terminals und dem Controller dieses Sub-Netzwerks zur Übertragung von Daten verstanden. Für jedes verfügbare Kanalbündel im lokalen Netzwerk prüft das Brücken-Terminal die Empfangsqualität. Das bedeutet, daß das Brücken-Terminal versucht, sich mit einem Controller eines Sub-Netzwerks zu synchronisieren. Hierbei werden nach der Synchronisation von der Hochfrequenzschaltung und vom Modem demodulierte Kontrolldaten des Controllers von der Protokollvorrichtung des Brücken-Terminals decodiert und zur Qualitätsprüfung ausgewertet.

Alle von den Sub-Netzwerken benutzten Kanalbündel werden als aktive Kanalbündel k₁, k₂, ... , kₚ bezeichnet. Die Protokollvorrichtung des Brücken-Terminals, das zwei Sub-Netzwerke verbinden soll, erstellt eine Liste mit allen möglichen aktiven Kanalbündelpaaren (kᵢ, kⱼ, wobei kᵢ≠kⱼ ist. Sind z.B. vier aktive Kanalbündel k₁, k₂, k₃ und k₄ detektiert worden, werden die Kanalbündelpaare (k₁, k₂), (k₁, k₃), (k₁, k₄), (k₂, k₃), (k₂, k₄)und (k₃, k₄) gebildet. Diese Kanalbündelpaare werden dann nach einem bestimmten Kriterium sortiert. Beispielsweise kann für jedes Kanalbündelpaar die Summe der empfangenen Energiedurchschnittswerte der zugeordneten Sub-Netzwerke gebildet werden. Dabei wird von dem Modem für jedes Datenbit die ermittelte Energie gemessen und an die Protokollvorrichtung geliefert, welche nach Empfang von mehreren Bits deren Energiedurchschnittswert berechnet.

Die Kanalbündelpaare werden entsprechend der Abnahme der berechneten Summe sortiert. Das bedeutet, daß das erste Kanalbündelpaar eine größere Summe als das zweite Kanalbündelpaar aufweist, das zweite Kanalbündelpaar eine größere Summe als das dritte Kanalbündelpaar usw. Es ist auch möglich für jedes Kanalbündelpaar die Empfangsqualität einer vom Controller gesendeten Kontrollnachricht der zugeordneten Sub-Netzwerke zu bestimmen und die Kanalbündelpaare entsprechend der Abnahme der Empfangsqualität zu sortieren. Die Empfangsqualität läßt sich z.B. von der Protokollvorrichtung anhand der Bitfehlerrate des empfangenen Signals bestimmen. Solche Bitfehlermessungen werden in den heute bekannten Terminals bei der Kanalcodierung durchgeführt. Das Brücken-Terminal verbindet dann die beiden Sub-Netzwerke mit den Kanalbündeln des ersten Kanalbündelpaares der sortierten Liste.

Wie oben erwähnt, kann ein Brücken-Terminal eine automatische Konfigurierung vornehmen, um zu bestimmen, welche Sub-Netzwerke verbunden werden sollen. Als weitere Möglichkeit ist vorgesehen, daß fest vorgegeben ist, welche Sub-Netzwerke ein Brücken-Terminal verbindet. Nach der Inbetriebnahme eines Brücken-Terminals nach einer der beiden angegebenen Methoden (automatische Konfigurierung oder Festlegung) kann des weiteren noch geprüft werden, ob im gesamten lokalen Netzwerk eine Schleife gebildet worden ist. Wie oben erwähnt, bedeutet eine Vermeidung von Schleifen, daß ein Sub-Netzwerk von einem anderen Sub-Netzwerk immer nur von einem bestimmten Brücken-Terminal Daten erhalten darf. In den Fig. 7, 8 und 9 sind jeweils lokale Netzwerke mit mehreren Sub-Netzwerken dargestellt, die Schleifen enthalten. Fig. 7 zeigt zwei Sub-Netzwerke 43 und 44, die über zwei Brücken-Terminals 45 und 46 verbunden sind. Die Brücken-Terminals 45 und 46 verbinden jeweils zwei Sub-Netzwerke. Bei diesem lokalen Netzwerk können Daten zwischen den Sub-Netzwerken 43 und 44 über beide Brücken-Terminals 45 und 46 übertragen werden. Es wird also eine Schleife zwischen den Sub-Netzwerken 43 und 44 gebildet.

In Fig. 8 ist ein lokales Netzwerk mit drei Sub-Netzwerken 47 bis 49 dargestellt. Ein Brücken-Terminal 50 verbindet die Sub-Netzwerke 47 und 48, ein Brücken-Terminal 51 verbindet die Sub-Netzwerke 48 und 49 und ein Brücken-Terminal 52 die Sub-Netzwerke 47 und 49. Bei diesem lokalen Netzwerk kann beispielsweise das Sub-Netzwerk 47 Daten vom Sub-Netzwerk 48 über das Brücken-Terminal 50 oder die Brücken-Terminals 51 und 52 und das Sub-Netzwerk 49 erhalten.

Fig. 9 zeigt vier Sub-Netzwerke 53 bis 56. Das Sub-Netzwerk 53 ist mit dem Sub-Netzwerk 54 über das Brücken-Terminal 57 und das Sub-Netzwerk 54 über das Brücken-Terminal 58 mit dem Sub-Netzwerk 55 und über das Brücken-Terminal 59 mit dem Sub-Netzwerk 56 verbunden. Ein Brücken-Terminal 60 verbindet noch die Sub-Netzwerke 55 und 56. Auch bei diesem lokalen Netzwerk der Fig. 9 wird mit den Brücken-Terminals 58 bis 60 eine Schleife gebildet.

Würde eine solche Schleifenbildung zugelassen, dann gäbe es keine eindeutigen Übertragungswege zwischen einem Daten aussendenden Terminal und einem Daten empfangenden Terminal. In diesem Fall müßten dann Informationen über die Übertragungswege für jeden Empfänger vorgesehen sein. Beispielsweise müßte im lokalen Netzwerk nach Fig. 8 festgelegt sein, daß ein Terminal des Sub-Netzwerks 47 seine Daten über das Brücken-Terminal 50 zu einem Terminal des Sub-Netzwerks 48 überträgt und nicht über die Brücken-Terminals 51 und 52 und das Sub-Netzwerk 49 zu dem Terminal des Sub-Netzwerks 48. Diese zusätzliche Informationsermittlung läßt sich aber vermeiden, wenn keine Schleifen gebildet werden.

Im folgenden wird beschrieben, wie festgestellt wird, ob z.B. nach der Wahl eines Kanalbündelpaares (kᵢ, kⱼ) und der dadurch entstehenden Verbindung der Sub-Netzwerke mit den Kanalbündeln kᵢ und kⱼ über das zu prüfende Brücken-Terminal eine Schleife gebildet worden ist. Das zu prüfende Brücken-Terminal (Prüfung führt eine Protokollvorrichtung 36 durch) sendet eine Schleifentest-Nachricht (loop test message) zu beiden Sub-Netzwerken, mit denen das zu prüfende Brücken-Terminal verbunden ist. Die Schleifentest-Nachricht enthält eine das zu prüfende Brücken-Terminal kennzeichnende Identifikationsnummer ID und einen Subnetz-Zählerwert HC, welcher auf 0 gesetzt ist. Nach Aussendung der Schleifentest-Nachricht wird ein Zeitzähler TC gestartet.

Eine Schleifentest-Nachricht wird nur von einem Brücken-Terminal weiterverarbeitet. Wenn ein Brücken-Terminal eine Schleifentest-Nachricht erhält, die nicht die Identifikationsnummer des die Schleifentest-Nachricht empfangenden Brücken-Terminals aufweist, inkrementiert das Brücken-Terminal den Subnetz-Zählerwert HC (HC = HC + 1) und prüft, ob der sich ergebende Subnetz-Zählerwert HC einen gespeicherten Systemparameter TS überschreitet. Der gespeicherte Systemparameter TS gibt die maximal erlaubte Anzahl von Sub-Netzwerken des lokalen Netzwerks an. Wenn der Subnetz-Zählerwert HC größer als der Systemparameter TS (HC > TS) ist, wird die Schleifentest-Nachricht gelöscht, um das lokale Netzwerk nicht unnötig mit eventuell verfälschten Nachrichten zu belasten. Im anderen Fall wird die Schleifentest-Nachricht zu dem anderen Sub-Netzwerk des Brücken-Terminals geliefert. Mit Hilfe des Subnetz-Zählerwertes HC wird vermieden, daß eine Schleifentest-Nachricht aufgrund einer Nachrichtenverfälschung durch Übertragungsfehler ewig im lokalen Netzwerk kreist.

Wenn ein Brücken-Terminal seine eigene ausgesendete Schleifentest-Nachricht empfängt, d.h. die Schleifentest-Nachricht enthält die Identifikationsnummer des Brücken-Terminals, liegt eine Schleife vor.

Wird die automatische Konfigurierung eines Brücken-Terminals, das seinen Betrieb im lokalen Netzwerk aufnimmt, unter der Bedingung durchgeführt, daß keine Schleife vorliegt, ist die Konfigurierung nicht beendet, wenn eine Schleife gefunden worden ist. Dann muß die automatische Konfigurierung zur Findung von zwei Kanalbündeln mit dem nächsten Paar in der Liste durchgeführt werden.

Wenn dem zu prüfenden Brücken-Terminal eine ausgesendete Schleiftest-Nachricht innerhalb einer bestimmten Zeit nicht wieder zugeführt wird, d.h. der Zeitzähler TC überschreitet einen vorgegebenen Wert, stellt das zu prüfende Terminal fest, daß keine Schleife vorliegt. Aus Zuverlässigkeitsgründen kann der Schleifentest mehrmals nach zufälligen Zeitintervallen durchgeführt werden. Nur wenn alle Tests erfolgreich sind, ist die Konfigurierung beendet.

Wenn also festgestellt worden ist, daß ein Schleifentest nicht erfolgreich gewesen ist, wird das nächste Kanalbündelpaar der sortierten Liste ausgewählt und der Schleifentest hierfür durchgeführt. Dies wird solange durchgeführt bis ein Schleifentest erfolgreich gewesen ist oder alle Kanalbündelpaare getestet worden sind. In diesem Fall kann das Brücken-Terminal nicht verwendet werden oder dessen Standort wird zum Start einer neuen automatischen Konfigurierung verschoben.

## Patentansprüche

1. Verfahren zur Konfiguration eines Brücken-Terminals (4, 5) zur Verbindung von Sub-Netzwerken (1-3) in einem lokalen Netzwerk, wobei das lokale Netzwerk mehrere Sub-Netzwerke (1-3) mit drahtlos kommunizierenden Terminals (4-16) und mehrere Brücken-Terminals (4, 5) enthält, die jeweils Daten zwischen wenigstens zwei Sub-Netzwerken (1-3) übertragen, **gekennzeichnet durch** die Schritte:
- Überprüfen nach Inbetriebnahme eines Brücken-Terminal (4, 5) welche Sub-Netzwerke (1-3) von diesem Brücken-Terminal (4, 5) erreichbar sind und welche Kanalbündel (kₚ) von den erreichbaren Sub-Netzwerken (1-3) benutzt werden, wobei zur Feststellung der Erreichbarkeit eine Empfangsqualität jedes benutzten Kanalbündels (kₚ) überprüft wird und eine Benutzung eines Kanalbündels (kₚ) in einem Sub-Netzwerk (1-3) die Verwendung eines bestimmten Kanalbündels (kₚ) von den Terminals dieses Sub-Netzwerkes (1-3) zur Übertragung von Daten darstellt;
- Erstellen einer Liste mit allen möglichen Kombinationen (ki, kj) von benutzten Kanalbündeln (kₚ) mit ki≠kj, die jeweils n Elemente als Kennung für die erreichbaren m Subnetzwerke (1-3) mit m > n und n > 1 enthalten,
- Sortieren der Liste der Kanalbündelkombinationen (ki, kj) nach einem vorgebbaren Kriterium;
- Verbinden der Sub-Netzwerke (1-3), deren Kennungen in der ersten Kanalbündelkombination (ki, kj) der sortieren Liste aufgeführt ist.

2. Verfahren nach Anspruch 1, **dadurch gekennzeichnet, dass** die von einem Brücken-Terminal (4, 5) verwendete Kennung eine Eigenschaft eines Sub-Netzwerks (1-3) ist.

3. Verfahren nach Anspruch 1 oder 2, **dadurch gekennzeichnet, dass** die von einem Brücken-Terminal(4, 5) verwendete Kennung das einem Sub-Netzwerk (1-3) zugeordnete Kanalbündel(kₚ) ist.

4. Verfahren nach einem der Ansprüche 1, 2, oder 3, **dadurch gekennzeichnet, dass** das Brücken-Terminal (4, 5) die Kennung eines Sub-Netzwerks(1-3) von einem als Controller bezeichneten Terminal (4-16) des Sub-Netzwerks (1-3) empfangs, wobei der Controller die Terminals in dem Sub-Netzwerk (1-3) steuert.

5. Verfahren nach einem der Ansprüche 1 bis 4, **dadurch gekennzeichnet, dass** die Liste Kanalbündelkombinationen mit Kennungen von zwei Sub-Netzwerken (1-3) umfasst, wobei ein Brücken-Terminal (4, 5) nach der Verbindung von zwei Sub-Netzwerken (1-3)) überprüft, ob eine Schleife vorliegtwobei im Fall einer Schleife, die bestehende Verbindung zwischen den Sub-Netzwerken über dieses Brückentenninal aufgehoben wird und dieses Brücken-Terminal (4, 5) Sub-Netzwerke (1-3) mit Kennungen einer weiteren Kanalbündel Kombination der sortieren Liste verbindet.

6. Verfahren nach einem der Ansprüche 1 bis 5, **dadurch gekennzeichnet, dass** das Brücken-Terminal(4, 5) zur Überprüfung, ob eine Schleife vorliegt, wenigstens eine Schleifenrest-Nachricht aussendet, wobei bestimmt wird, dass keine Schleife zwischen den Sub-Netzwerken vorliegt, wenn die Schleifentest-Nachrichtnicht zu dem aussendenden Brücken-Terminalnach einer bestimmten Zeit zurückkommt.

7. Verfahren nach einem der Ansprüche 1 bis 3, **dadurch gekennzeichnet, dass** eine Summe von empfangenen Durchschnittsenergien für jede Kanalbündelkombination gebildet wird und die Kanalbündelkombination entsprechend der Abnahme der berechneten Summen sortiert werden.

8. Verfahren nach einem der Ansprüche 1 bis 3, **dadurch gekennzeichnet, dass** die Empfangsqualität für jede Kanalbündelkombination bestimmt wird und die Kanalbündelkombinationen entsprechend der Abnahme der Empfangsqualität sortiert werden.

9. Verfahren nach einem der Ansprüche 1 bis 8, **dadurch gekennzeichnet, dass das** Brücken-Terminal (4, 5) eine von einem neu registrierten Terminal (4-16) empfangene Verteil-Nachricht mit der Identifikationsnummer des Terminals auswertet und speichert, wobei die Verteil-Nachricht an die am Brückenterminal (4, 5) angeschlossenen Sub-Netzwerke (1-3) gesendet wird.

10. Brücken-Terminal zur Verbindung von Sub-Netzwerken (1-3) in einem lokalen Netzwerk, wobei das lokale Netzwerk mehrere Sub-Netzwerke (1-3) mit drahtlos kommunizierenden Terminals (4-16) und mehrere Brücken-Terminals (4, 5) enthält, die jeweils Daten zwischen wenigstens zwei Sub-Netzwerken (1-3) übertragen, **dadurch gekenntzeichnet, dass**
- das Brücken-Terminal(4, 5) Mittel aufweist, um nach Inbetriebnahme des Brücken-Terminals (4, 5) zu überprüfen, welche Sub-Netzwerke (1-3) von diesem Brücken-Terminal (4, 5) erreichbar sind und welche Kanalbündel (kₚ) von den erreichbaren Sub-Netzwerken (1-3) benutzt werden, wobei zur Feststellung der Erreichbarkeit eine Empfangsqualität jedes benutzten Kanalbündels (kₚ) überprüft wird und eine Benutzung eines Kanalbündels (kₚ) in einem Sub-Netzwerk (1-3) die Verwendung eines bestimmten Kanalbündels (kₚ) von den Terminals dieses Sub-Netzwerkes (1-3) zur Übertragung von Daten darstellt;
- und Mittel zur Erstellung einer Liste angeordnet sind wobei die Liste alle möglichen Kombinationen (ki, kj) von benutzten Kanalbündeln (kₚ) mit ki≠kj enthält, die jeweils n Elemente als Kennung für die erreichbaren m Subnetzwerke (1-3) mit m > n und n > 1 enthalten,
- und Mittel zum Sortieren der Liste der Kanalbündelkombinationen (ki, kj) nach einem vorgebbaren Kriterium aufweist, wobei das Brücken-Terminal (4,5) die Sub-Netzwerke (1-3) verbindet, deren Kennungen in der ersten Kanalbündelkombination (ki, kj) der sortieren Liste aufgeführt sind.

11. Brücken-Terminal nach Anspruch 10, **dadurch gekennzeichnet, dass** das Brücken-Terminal (4, 5) eine Funkvorrichtung (19) mit wenigstens einer Hochfrequenzschaltung (21, 38), einem Modem (22, 37) und einer Protokollvorrichtung (23, 36) und eine Funkschaltvorrichtung (34, 40) enthält, wobei die Funkschaltvorrichtung (34, 40) zur Steuerung des Datenaustausches zwischen den Sub-Netzwerken (1-3) und die Protokollvorrichtung (23, 36) zur Verbindungssteuerung zwischen zwei Sub-Netzwerken (1-3) vorgesehen sind.

12. Lokales Netzwerk mit wenigstens einem Brückenterminal (4, 5) nach Anspruch 10 oder 11 zur drahtlosen Übertragung von Daten zwischen den Terminals (4-16) von wenigstens zwei Sub-Netzwerken (1-3).

## Claims

1. A method for configuration of a bridge terminal (4, 5) to connect sub-networks (1-3) in a local area network, where the local area network comprises a plurality of sub-networks (1-3) with terminals (4-16) communicating in wireless fashion and a plurality of bridge terminals (4, 5), which transmit data between at least two sub-networks (1-3), which method is **characterized by** the steps of:
- checking, after a bridge terminal (4-5) has been put into operation, which sub-networks (1-3) can be reached by this bridge terminal (4-5) and which channel groups (kₚ) are used by the sub-networks (1-3) that can be reached, where, for detecting the reachability, a receiving quality is checked of each channel group (kₚ) used and a use of a channel group (kₚ) in a sub-network (1-3) represents the use of a certain channel group (kₚ) by the terminals of this sub-network (1-3) for data transmission,
- compiling a list with all possible sets (ki, kj) of channel groups (kₚ) used, with ki≠kj, which contain each n elements as an identification for the m sub-networks (1-3) that can be reached with m>n and n>1,
- sorting the list of the sets of channel groups (ki, kj) in accordance with a predefined criterion,
- connecting the sub-networks (1-3) whose identifications are stated in the first set of channel groups (ki, kj) of the sorted list.

2. A method as claimed in claim 1, **characterized in that** the identification used by a bridge terminal (4, 5) is a feature of a sub-network (1-3).

3. A method as claimed in claim 1 or 2, **characterized in that** the identification used by a bridge terminal (4-5) is the channel group (kₚ) assigned to a sub-network (1-3).

4. A method as claimed in claim 1, 2, or 3, **characterized in that** a bridge terminal (4-5) receives the identification of a sub-network (1-3) from a terminal (4-16) designated as a controller in the sub-network (1-3), which controller is charged with controlling the terminals the sub-network (1-3).

5. A method as claimed in any one of the claims 1 to 4, **characterized in that** the list contains sets of channel groups of identifications of two sub-networks (1-3), where, after two sub-networks (1-3) have been connected, a bridge terminal (4-5) checks whether there is a loop and where the existing connection between the sub-networks is canceled via this bridge terminal when there is a loop and this bridge terminal (4-5) connects sub-networks (1-3) having identifications of a further set of channel groups of the sorted list.

6. A method as claimed in any one of the claims 1 to 5, **characterized in that** the bridge terminal (4-5), to check whether there is a loop, broadcasts at least one loop check message and there is determined that there is no loop between the sub-networks when the loop check message does not return to the broadcasting bridge terminal after a certain period of time.

7. A method as claimed in any one of the claims 1 to 3, **characterized in that** a sum of received average energies is formed for each set of channel groups and the set of channel groups is sorted in accordance with the reduction of the calculated sums.

8. A method as claimed in any one of the claims 1 to 3, **characterized in that** the receiving quality is determined for each set of channel groups and the sets of channel groups are sorted in accordance with the reduction of the receiving quality.

9. A method as claimed in any one of the claims 1 to 8, **characterized in that** the bridge terminal (4, 5) evaluates a broadcast message received from a newly registered terminal (4-16), which broadcast message contains the identification number of the terminal, and stores this message, which broadcast message is transmitted to the sub-networks (1-3) connected to the bridge terminal (4, 5).

10. A bridge terminal for connecting sub-networks (1-3) in a local area network in which the local area network comprises a plurality of sub-networks (1-3) having terminals (4-16) communication in wireless fashion and a plurality of bridge terminals (4, 5), which transmit data between at least two sub-networks (1-3), **characterized in that**
- the bridge terminal (4, 5) comprises means to check, after the bridge terminal (4, 5) has been put into operation, which sub-networks (1-3) can be reached by this bridge terminal (4, 5) and which channel groups (kₚ) are used by the sub-networks (1-3) that can be reached, where, for detecting the reachability, a receiving quality is checked of each channel group (kₚ) used and a use of a channel group (kₚ) in a sub-network (1-3) represents the use of a certain channel group (kₚ) by the terminals of this sub-network (1-3) for data transmission,
- and means for compiling a list are provided, which list contains all possible sets (ki, kj) of channel groups (kₚ) used, with ki≠kj, which contain each n elements as an identification for the m sub-networks (1-3) that can be reached with m>n and n>1,
- and means for sorting the list of the sets of channel groups (ki, kj) in accordance with a predefined criterion, the bridge terminal (4, 5) connecting the sub-networks (1-3) whose identifications are stated in the first set of channel groups (ki, kj) of the sorted list.

11. A bridge terminal as claimed in claim 10, **characterized in that** the bridge terminal (4, 5) comprises a radio device (19) having at least a high-frequency circuit (21-38), a modem (22-37) and a protocol device (23, 36) and a radio switching device (34, 40), the radio switching device (34, 40) being provided for controlling the exchange of data between the sub-networks (1-3) and the protocol device (23, 36) to control the connection between two sub-networks (1-3).

12. A local area network comprising at least one bridge terminal (4, 5) as claimed in claim 10 or 11 for the wireless transmission of data between the terminals (4-16) of at least two sub-networks (1-3).

## Revendications

1. Procédé de configuration d'un terminal de pont (4, 5) pour la liaison de sous-réseaux (1, 3) dans un réseau local, le réseau local contenant plusieurs sous-réseaux (1-3) avec des terminaux communicant sans fil (4-16) et plusieurs terminaux de pont (4,5) qui transmettent respectivement des données entre au moins deux sous-réseaux (1-3), **caractérisé par** les étapes suivantes :
- contrôle après la mise en service d'un terminal de pont (4, 5) des sous-réseaux (1-3) qui sont accessibles par ce terminal de pont (4, 5) et des faisceaux de canaux (kp) qui sont utilisés par les sous-réseaux (1-3) accessibles, une qualité de réception de chaque faisceau de canaux (kₚ) utilisé étant contrôlée pour la détermination de l'accessibilité et une utilisation d'un faisceau de canaux (kₚ) représentant dans un sous-réseau (1-3) l'utilisation d'un faisceau de canaux (kₚ) déterminé par les terminaux de ce sous-réseau (1-3) pour la transmission de données ;
- élaboration d'une liste avec toutes les combinaisons possibles (ki, kj) de faisceaux de canaux (kₚ) utilisés avec ki≠kj, qui contiennent respectivement n éléments comme identification pour les m sous-réseaux accessibles (1-3) avec m > n et n > 1,
- tri de la liste des combinaisons de faisceaux de canaux (ki, kj) selon un critère à déterminer préalablement;
- liaison des sous-réseaux (1 - 3) dont les identifications sont exposées dans la première combinaison de faisceaux de canaux (ki, kj) de la liste triée.

2. Procédé selon la revendication 1, **caractérisé en ce que** l'identification utilisée par un terminal de pont (4, 5) est une propriété d'un sous-réseau (1-3).

3. Procédé selon l'une des revendications 1 ou 2, **caractérisé en ce que** l'identification utilisée par un terminal de pont (4, 5) est le faisceau de canaux (kₚ) affecté à un sous-réseau (1 - 3).

4. Procédé selon l'une des revendications 1 ou 2, **caractérisé en ce que** le terminal de pont (4, 5) reçoit l'identification d'un sous-réseau (1-3) d'un terminal (4-16) désigné comme un contrôleur du sous-réseau (1-3), le contrôleur commandant les terminaux dans le sous-réseau (1-3).

5. Procédé selon l'une des revendications 1 à 4, **caractérisé en ce que** la liste comprend des combinaisons de faisceaux de canaux avec des identifications de deux sous-réseaux (1-3), dans lequel un terminal de pont (4,5) contrôle après la liaison de deux sous-réseaux (1-3) s'il existe une boucle et, en cas de boucle, la liaison existante entre les sous-réseaux est supprimée par l'intermédiaire de ce terminal de pont et ce terminal de pont (4, 5) relie les sous-réseaux (1-3) avec des identifications d'une combinaison de faisceaux de canaux supplémentaire.

6. Procédé selon l'une des revendications 1 à 5, **caractérisé en ce que** le terminal de pont (4, 5) est présent pour contrôler si une boucle est présente, transmet au moins un message de test de boucle qui permet de déterminer qu'il n'existe aucune boucle entre les sous-réseaux lorsque le message de test de boucle ne revient pas au terminal de pont à transmettre après une durée déterminée.

7. Procédé selon l'une des revendications 1 à 3, **caractérisé en ce qu'**une somme des énergies moyennes reçues est formée pour chaque combinaison de faisceaux de canaux et la combinaison de faisceaux de canaux est triée en fonction de la diminution des sommes calculées.

8. Procédé selon l'une des revendications 1 à 3, **caractérisé en ce que** la qualité de réception est déterminée pour chaque combinaison de faisceaux de canaux et les combinaisons de faisceaux de canaux sont triées en fonction de la diminution de la qualité de réception.

9. Procédé selon l'une des revendications 1 à 8, **caractérisé en ce que** le terminal de pont (4, 5) évalue et enregistre un message de diffusion reçu par un nouveau terminal enregistré (4-16) avec le numéro d'identification du terminal, le message de diffusion étant transmis aux sous-réseaux (1-3) raccordés au terminal de pont (4-5).

10. Terminal de pont pour la liaison de sous-réseaux (1-3) dans un réseau local, le réseau local contenant plusieurs sous-réseaux avec des terminaux communicant sans fil (4-16) et plusieurs terminaux de pont (4, 5) qui transmettent respectivement des données entre au moins deux sous-réseaux (1-3), **caractérisé en ce**
- **que** le terminal de pont (4,5) présente des moyens pour contrôler, après la mise en service du terminal de pont (4, 5) les sous-réseaux (1-3) qui sont accessibles par ce terminal de pont (4, 5) et les faisceaux de canaux (kₚ) qui sont utilisés par les sous-réseaux (1-3) accessibles, une qualité de réception de chaque faisceau de canaux (kₚ) utilisé étant contrôlée pour la détermination de l'accessibilité et une utilisation d'un faisceau de canaux (kₚ) représentant dans un sous-réseau (1-3) l'utilisation d'un faisceau de canaux (kₚ) déterminé par les terminaux de ce sous-réseau (1-3) pour la transmission de données ;
- et des moyens pour élaborer une liste avec toutes les combinaisons possibles (ki, kj) de faisceaux de canaux (kₚ) utilisés avec ki≠kj, qui contiennent respectivement n éléments comme identification pour les m sous-réseaux accessibles (1-3) avec m > n et n > 1,
- et des moyens pour trier la liste des combinaisons de faisceaux de canaux (ki, kj) selon un critère à déterminer préalablement, le terminal de pont (4, 5) reliant les sous-réseaux (1-3) dont les identifications sont exposées dans la première combinaison de faisceaux de canaux (ki, kj) de la liste triée.

11. Terminal de pont selon la revendication 10 **caractérisé en ce que** le terminal de pont (4, 5) présente un dispositif radio (19) avec au moins un circuit à haute fréquence (21, 38), un modem (22, 37) et un dispositif de protocole (23, 36) et un dispositif de commutation radio (34, 40), le dispositif de commutation radio (34, 40) étant prévu pour la commande de l'échange de données entre les sous-réseaux (1-3) et le dispositif de protocole (23, 36) pour la commande de la liaison entre deux sous-réseaux (1-3).

12. Réseau local avec au moins un terminal de pont (4,5) selon la revendication 10 ou 11 pour la transmission sans fil de données entre les terminaux (4-16) d'au moins deux sous-réseaux (1-3).
